# EUROPEAN PATENT APPLICATION

(11) **EP 2 755 003 A1**
(43) Date of publication of application: **16.07.2014**
(21) Application number: 13177892.0
(22) Date of filing: 24.07.2013
(51) Int. Cl.: G01H 3/12

(54) **Virtual audio map**

(30) Priority: 10.01.2013 US 201313738803
(71) Applicant: Mitel Networks Corporation, Ottawa, ON K2K 2W7 (CA)
(72) Inventor: Cheng, Wilson, Nepean, Ontario K2J 4N5 (CA)
(74) Representative: Derry, Paul Stefan

(57) **Abstract**

A system and method for mapping acoustic activities is disclosed. One method comprises receiving acoustic measurements recorded for a predetermined interval at a plurality of telephonic computing devices that are located at a determined location. A map of the acoustic measurements is created based on a location of each of the plurality of telephonic computing devices at which the acoustic amplitude measurement is recorded. An amplitude and/or frequency of the acoustic measurements can be displayed on the map relative to the location of the telephonic computing device at the selected location to form an acoustic map.

## Description

### Field

This disclosure relates to acoustic mapping.

### Background

With the advent of inexpensive electronic products, homes, offices, factories, and other types of buildings are now full of electronic devices. These devices are often multipurpose electronics capable of performing a broad array of functions. For example, desktop computers, laptop computers, tablet computing devices, smart phones, and office phones are often spread throughout a structure. The ability to interconnect and network electronic devices spread throughout a structure provides new opportunities to take advantage of the devices' capabilities during periods when they are not otherwise being used.

### Brief Description of the Drawings

Features and advantages of the present disclosure will be apparent from the detailed description which follows, taken in conjunction with the accompanying drawings, wherein:
FIG. 1 illustrates a block diagram of an example system for acoustic mapping;
FIG. 2 illustrates an example illustration of audio amplitude and frequency information from a selected electronic device at a determined location that is displayed using the system for acoustic mapping;
FIG. 3 illustrates an example display of the system for acoustic mapping;
FIG. 4 illustrates an additional example display of the system for acoustic mapping; and
FIG. 5 depicts a flow chart of a method for mapping acoustic activities.

Reference will now be made to the exemplary embodiments illustrated, and specific language will be used herein to describe the same. It will nevertheless be understood that no limitation of the claimed scope is thereby intended.

### Detailed Description

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "acoustic event" refers to sound waves that can be detected by an electronic device. The acoustic event may refer to a relatively short event that lasts only milliseconds, or to a relatively long event, such that may last for minutes or even hours.

Other terms may be defined elsewhere in the body of this specification.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter. The following definitions are provided for clarity of the overview and embodiments described below.

A broad array of electronic devices, including computing devices and telephonic devices, are often spread throughout a building such as an office, factory, or home. A large percentage of the time, many of these devices lay dormant, without being used. The ability to network electronic devices allows for opportunities to benefit from the distributed location and unused potential of these devices.

For example, many of the above mentioned electronic devices include peripherals such as microphones and cameras. These peripherals can be used to detect motion and sound. When the devices are networked, it is possible to detect motion and sound over a desired area using a number of electronic devices. A networked array of electronic devices may communicate audio and/or video information to a server. This information can then be stored and/or communicated to a graphical user interface where the information can be represented in a graphical fashion to allow a user to monitor the selected area.

More particularly, audio information can be obtained from the networked array of electronic devices. Audio information may be obtained from any electronic device that is connected to an electronic network and is configured for detecting acoustic information. For instance, computers, tablets, phones, gaming devices, smart TVs, and so forth may be capable of detecting acoustic information and communicating it to a central location, such as a server.

In some embodiments, a more select number of devices may be identified and used to receive audio information. For instance, one type of device or one class of device can significantly reduce the complexity in creating a network of devices configured to detect acoustic information. The more select number of devices can be connected to a single type of network. This enables the audio information to more easily be communicated to a single source, such as a server, without the need for multiple different types of device drivers to communicate with different kinds of electronic devices. In addition, the select number of devices can have similarly characterized components, such as microphones. The ability to detect acoustic information using similarly characterized components can significantly improve the quality of the audio information. Different types of microphones or other acoustic detectors can record the same audio information with different amplitudes and frequencies. The select number of devices with similarly characterized microphones can more accurately detect and report a substantially similar amplitude and frequency response of an acoustic event. This allows the audio information detected and communicated by an array of devices to more accurately reflect the actual acoustic event that was detected.

A plurality of telephonic devices, such as speaker phones, may be configured to detect acoustic events within a selected location. The telephonic devices may be configured to detect an acoustic event(s) with an amplitude that is greater than a selected threshold and/or within a selected frequency. The acoustic events may be detected when the telephonic devices are not in use.

The telephonic devices may be a single type or single brand of device, thereby enabling the detection of an acoustic event by a plurality of telephonic devices having similarly characterized acoustic detection devices and measurement schemes. The information collected by the telephonic devices can then be communicated to a central location such as a server. The information can be characterized and displayed in a graphical display, wherein each recorded acoustic event can be displayed at a location associated with the telephonic device which detected the event. The displayed information can be used for a variety of purposes including safety, security, maintenance, and so forth. This will be discussed more fully in the proceeding paragraphs.

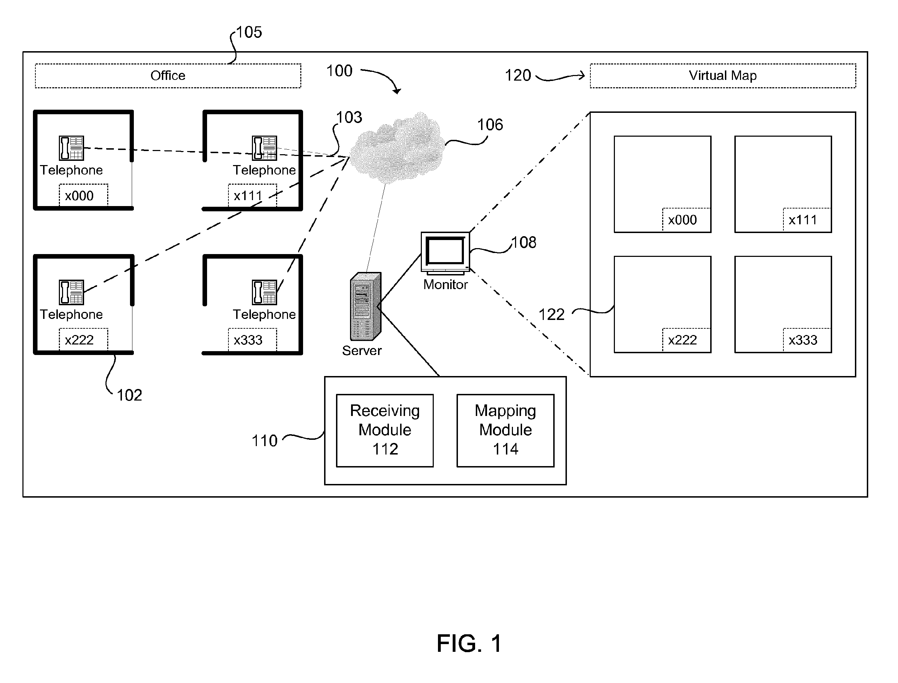

FIG. 1 provides an example illustration of a system for acoustic mapping 100. The system comprises a plurality of electronic devices having acoustic inputs. In this example, the electronic devices are telephonic devices 102, such as speakerphones. The telephonic devices are connected via a network connection 103 to a server 104. The server may be located in the same location as the telephonic devices. Alternatively, the server may be located at a remote location and connected to the telephonic devices via a network connection such as a private or public network connection. The public or private network connection may be formed via the internet 106.

The server can be in communication with a display device 108. The display device may be connected directly to the server, or may be connected via a network connection. The display device may be a display that is connected with the server directly. Alternatively, the display device may be a computing device, such as a desktop computer, laptop computer, tablet computing device, smart phone, or other type of computing device that is connected to a display. The display may be external to the computing device or embedded with the computing device.

An acoustic mapping module 110 can be in communication with the server 104. The acoustic mapping module can comprise a receiving module 112. The receiving module is operable to receive samples of acoustic measurements recorded for a predetermined interval at the plurality of telephonic devices 102. The telephonic devices may be positioned at a determined location. The determined location may be a fixed, known location such as at a selected desk, cubicle, or room in an office building. Alternatively, the determined location may be a location of a mobile telephonic device that is communicated to the server along with the acoustic measurements. The location of the mobile device may be determined based on triangulation, global positioning satellite (GPS) information, network connection information, and so forth.

The acoustic mapping module 110 can also include a mapping module 114. The mapping module can be configured to map a location for each sample of the acoustic measurements relative to a location at which the sample is recorded by a telephonic device. For example, each sample can be communicated with identification information or location information. The identification information or location information may be contained in an IP packet header that can be used to identify the telephonic device from which the packet was sent. The identification information may be mapped to location information. For instance, a database may contain a location of each telephonic device in a selected region, such as a room, office, building, or campus. The database can also include the identification information, such as an internet protocol (IP) address of the telephonic device, a medium access control (MAC) address of the telephonic device, or so forth. A location of a sample can be determined by associating identification information in the packet that identifies a particular telephonic device, with location information in the database. The mapping module can then associate each sample of the acoustic measurements with the determined location of the telephonic device.

The mapping module 114 can further be configured to display a representation of at least one of an amplitude and a frequency of the acoustic measurements. The display may comprise a graphical display configured to illustrate the amplitude and/or frequency of the acoustic measurements relative to a location of the telephonic device to provide an acoustic map configured to display the acoustic activities at the selected location.

FIG. 1 includes one example of a graphical display comprising a virtual map 120. The virtual map illustrates a display 122 of a location of each of the telephonic devices. The virtual map can be configured to provide a graphical representation of the amplitude and/or frequency of samples of the acoustic measurements recorded for a predetermined interval at the telephonic devices 102. For example, the display may be as simple as showing a color coding scheme for selected levels of amplitude, such as a green color showing no samples occurring above an amplitude threshold, a yellow color showing that a selected number of samples were above the amplitude threshold in a predetermined period of time, or a relatively small number of samples were significantly above the amplitude threshold in a predetermined period of time; and a red color showing that a relatively large number of samples were above the amplitude threshold in the predetermined period of time.

Each telephonic device 102 that is connected and/or connectable to the acoustic mapping module 110 may be configured to communicate digital or digitized samples of an acoustic event when an amplitude of the acoustic event, or a portion of the acoustic event, is greater than the selected threshold. Alternatively, each telephonic device can be configured to derive a desired dynamic threshold level based on environmental factors at the location at which the telephonic device is located.

For instance, the telephonic device with the extension x222 may be located near a noise producing artifact, such as a copy machine. The average noise near telephonic device x222 may be higher than for the telephonic device with x111. The dynamic amplitude threshold level for a selected telephonic device may be set to change based on a rolling average of detected background noise, or another desired mathematical algorithm for selecting a threshold level over time. The ability to change the threshold level enables a reduction in noise in the system during relatively loud periods, such as during the day, while enabling the threshold to be set to more sensitive levels during quieter times, such as after an office or factory closes, or during the night when fewer workers are in the building.

For example, an acoustic event with a specific amplitude that is detected by one or more of the telephonic devices 102 during the day may be displayed as green in the corresponding displays 122, while an acoustic event with the same specific amplitude that is detected by the same telephonic devices during the night may be displayed as yellow or red in the corresponding displays, based on a change in the threshold level for one or more of the telephonic devices.

Each telephonic device 102 can be configured to detect and store acoustic events for a selected period of time. The period of time can vary from several seconds to several minutes. The actual period of time for which acoustic events are recorded can be set by a user based on the needs of the system. When a portion of an acoustic event exceeds the fixed or variable threshold, samples can be communicated that occurred both before and after the period of time at which the acoustic event exceeded the threshold level. For instance, samples taken from several seconds to several minutes before and after a threshold event may be communicated. This allows a user to better analyze the acoustic event that was greater than the threshold level. The acoustic events may only be recorded when the telephonic device is not in use. Alternatively, the acoustic events may be recorded even when the device is in use.

In addition to displaying amplitude information, one or more of the displays 122 can also be configured to display frequency information for the acoustic measurements of the telephonic devices. Whether a display shows frequency information or not can be dependent on the type of electronic device, such as the telephonic device 102, which is used to record the information. The telephonic device may record samples of audio information from acoustic events and extract both amplitude and frequency information. The amplitude and frequency information can then be displayed at the corresponding location for the telephonic device in the virtual map 120.

For example, the telephonic device 102 at x111 may be configured to detect the acoustic event using a microphone that is typically used for teleconferencing or hands free communication. The acoustic information can be sampled and converted to digital samples that represent an amplitude of the acoustic event at each sample period. As previously discussed, only those samples that have an amplitude greater than a threshold amplitude level may be communicated to the server 104.

In addition, an acoustic sample that is recorded over time can be converted to a frequency representation. For example, a Fourier transform or a Fast Fourier Transform (FFT) may be performed on the recorded acoustic event to convert the recording from amplitude vs. time to a display of amplitude vs. frequency. This information can be very helpful in monitoring the acoustic events, as it can provide the person or device monitoring the acoustic events with additional information that may be useful in determining what physical occurrence caused the acoustic event.

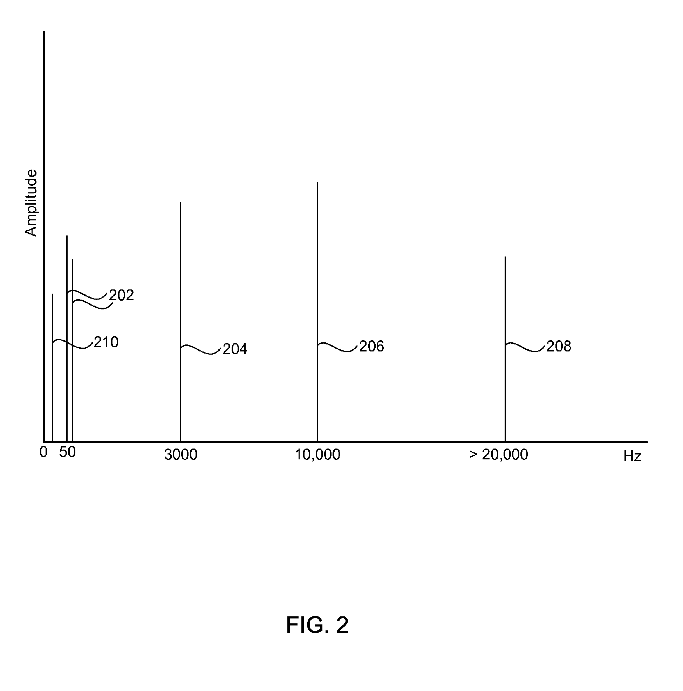

FIG. 2 provides one example of frequency information that may be displayed in one or more of the displays 122. The display can comprise an illustration of analog or digital signals that show the signal or sample's frequency versus amplitude. FIG. 2 shows discrete lines representing acoustic samples or signals at selected frequencies. However, the display may also show a continuous line, with varying amplitude, across an acoustic frequency band. The acoustic frequency band may include only sonic frequencies. Alternatively, it may include sub-sonic, sonic, and supersonic frequencies, depending on the bandwidth and capabilities of the acoustic detectors.

The amplitude(s) and frequency(s) of an acoustic event may be used to determine what is causing the acoustic event, or at least provide an indication as to the cause. For example, an acoustic event with a relatively large (high amplitude) signal occurring at 50 Hz or 60 Hz 202 may indicate a hum from an electrically powered device, such as a motor or light. Human voices can average around 3000 Hz 204. A fluorescent light ballast may produce a signal at around 10,000 Hz 206. A person can typically hear noises up to about 20,000 Hz 208. Frequencies between about 20 Hz 208 and 20,000 Hz are considered to be sonic frequencies. Supersonic frequencies occur above 20,000 Hz and subsonic frequencies typically occur below about 20 Hz.

Standard noises in buildings such as heating, cooling, fan noises, water flow, walking, typing, opening and shutting of drawers, and so forth may be identified based on the amplitudes and frequencies of the acoustic events that are detected and/or reported, whether in the subsonic, sonic, or supersonic frequency range. The telephonic device and/or the server may include a sound identification module that can be configured to identify various types of sounds based on the frequency and amplitude of the acoustic event.

While it is possible to record, transmit, and monitor a full audio signal in real time or delayed, there can be several problems with doing so. For example, most telephony systems in larger buildings are not designed for each telephony device to be used simultaneously. In a large office or building, if hundreds or thousands of handsets are instructed to send audio to a telephony server simultaneously, it may cause the communication infrastructure to overload. Even if an overload does not occur, it may cause an undesired load on the communications network. Recording all of the audio from dozens to thousands of phones can also be expensive. In addition, monitoring each phone in real time may also have legality issues, based on local wiretapping laws in different cities, states, and countries.

To overcome these limitations, rather than continuously recording, sampling can be used to detect acoustic events. The sample size may vary depending on the type of system used. A sample size of recorded or detected audio from micro seconds to hundreds of milliseconds may be used. The amplitude and frequency components of the sample (or a period longer than the actual sample) can then be derived. An electronic device, such as the telephonic device 102 can be configured to communicate the samples to the server via the network connection 103.

All frequency components for an audio sample may be communicated. Alternatively, the frequency components may be filtered, such that only frequency components for audio samples with an amplitude above the selected or dynamic threshold level are communicated. In some embodiments, filtering may be used to eliminate frequency components outside of selected frequency bins. The bins, comprising selected frequency bands, may be selected based on desired frequencies to view, such as the selected frequencies discussed with respect FIG. 2. The bins may comprise separate, discreet frequency bands. Alternatively, selected bands may overlap. For instance, a band designed to show buzzing from fluorescent light ballasts may overlap with a band designed to show water flowing through a heating system. The actual bands that are illustrated in a display may be selected by a user to display the desired information.

The samples may be recorded at a periodic frequency, such as several samples per second to one sample in tens of seconds. These samples may then be communicated to the server in near real time. The samples may also be saved at the electronic device and communicated in groups, such as once ever thirty seconds, once a minute, or so forth. Samples may only be communicated when one or more of the samples within a selected time period are greater than a fixed or variable threshold level. The actual sample size, frequency of recording, and communication timing can depend on the type of system, the capabilities of the telephonic device, the bandwidth of the communication network, and the desired information to be obtained from the system. By sending samples of the audio, a reduced amount of data can be communicated to a server, such as a telephony server. This can reduce the load on the communication system. In addition, the use of samples can eliminate potential issues with wiretapping and privacy.

In some embodiments, an electronic device, such as the telephonic device 102, can be configured to continuously monitor audio using a microphone on a hands free telephonic device. When an acoustic event occurs that has an amplitude greater than a selected or dynamic threshold level then the samples can be communicated. Samples may continue to be communicated for a selected period of time after the acoustic event occurred, such as for several seconds. The samples may contain the entire audio, allowing the audio to be listened to. Alternatively, a reduced sampling rate, as previously described, may be used. For instance, several millisecond long samples may be taken per second. When the acoustic event occurs, the samples that were recorded during the acoustic event, and a set time afterwards, may be communicated to the server 104. The acoustic mapping module 110 can then be used to analyze and display information using a graphic display such as the virtual map 120. A person or automated program monitoring the virtual map, or data associated with the virtual map, can identify that an acoustic event took place at a selected location based on a location of event on the display.

In the example of FIG. 1, telephonic devices 102 in an office 105 are illustrated, with a corresponding virtual map 120 showing a location of each telephonic device and displaying an amplitude and/or frequency response of acoustic event above a selected or dynamic threshold that is detected by one or more of the telephonic devices. This example is not intended to be limiting. Only four telephonic devices are illustrated in this example. A virtual map may contain audio amplitude/frequency displays corresponding to a location of tens, hundreds, or even thousands of devices located within one or more buildings. For example, a virtual map of a college campus or other type of campus can include a map of the location of telephonic devices, or other types of devices, relative to a location of the devices within multiple buildings.

The virtual map 120 may be static, wherein the map is configured to statically display amplitude and/or frequency information for acoustic events. Alternatively, the virtual map may be interactive, wherein a user can click on an area of the virtual map to zoom in and/or to obtain additional information. For instance, when an acoustic event occurs, a sampling rate of one or more telephonic devices receiving audio from the acoustic event in a selected area may be increased to obtain more accurate information or information about samples recorded prior to the acoustic event. The more accurate information can include more accurate frequency information that can enable detection of the type of acoustic event that occurred. The sampling rate may be increased automatically or manually for telephonic devices receiving an acoustic event. In addition, a user or automated agent may send a signal to electronic devices, such as telephonic devices, to receive and/or record full audio for a selected period of time before or after an acoustic event occurs.

Each sample of acoustic measurements may comprise a plurality of acoustic measurements that are recorded at a selected rate for the predetermined interval. The receiving module can be operable to receive a sample from the plurality of telephonic devices at a predetermined frequency. The receiving module can also be configured to categorize the acoustic amplitude measurements in each sample into a selected amplitude band. Each band can have a lower amplitude threshold and a higher amplitude threshold. The mapping module can be configured to provide a predetermined display for the amplitude of the measurement based on the selected amplitude band of the acoustic amplitude measurement. A graphical user interface (GUI) that is in communication with the acoustic mapping module, can be configured to display the acoustic map for the plurality of the telephonic devices at the determined location.

The virtual map 120 may be used to aggregate a large amount of information in a fashion that enables a user to quickly view and understand the information. For instance, based on a pattern in the virtual map, a user can identify a source of an acoustic event due to the higher amplitudes being reported closer to the acoustic event.

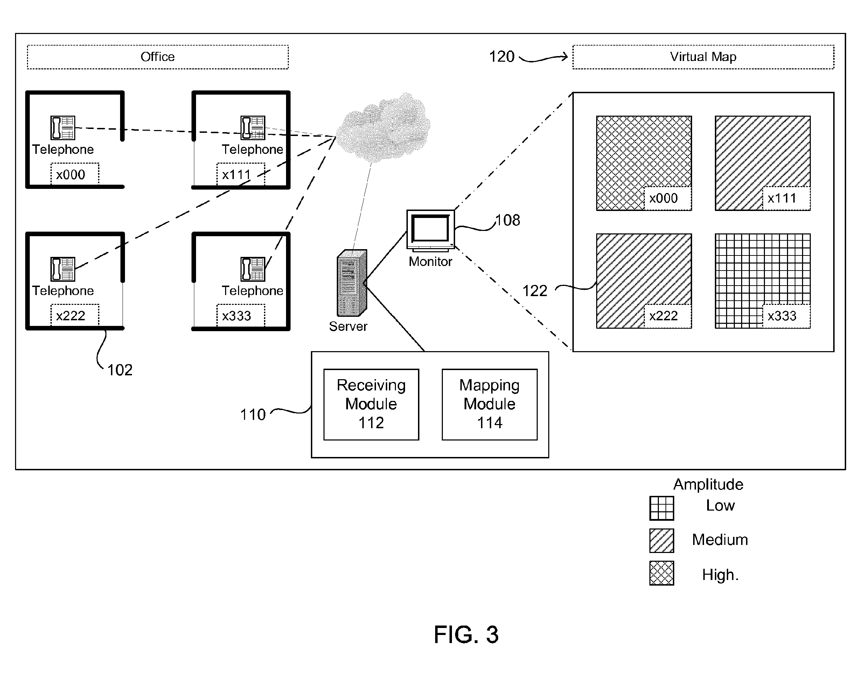

For instance, FIG. 3 illustrates an example in which an acoustic event occurs nearest to the telephonic device 102 with x000. The virtual map 120 illustrates that the acoustic event is recorded at the location of the telephonic device 102 with x100 reporting a high amplitude, while x222 and 111 eport a medium amplitude, and x333 reports a low amplitude. This can allow a person monitoring the virtual map on the display 108 to identify that the acoustic event likely occurred closest to the telephonic device with x000. In larger buildings with a greater number of telephonic devices, a higher granularity is possible to identify a location of an acoustic event.

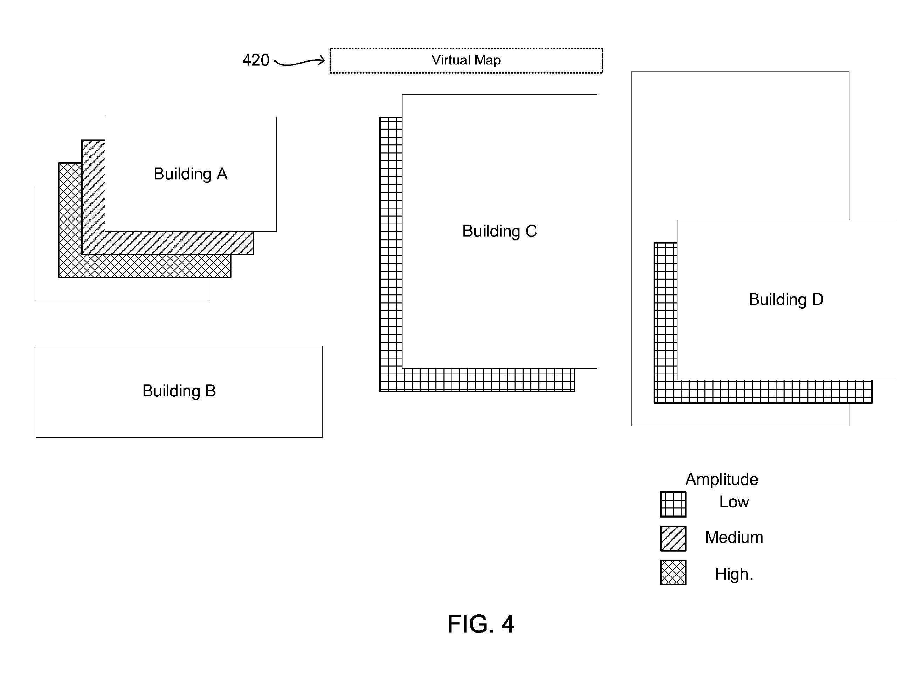

FIG. 4 provides another example of a virtual map 420. In this example, a campus having multiple buildings, such as an office campus or university campus is illustrated. The virtual map can include multiple floors. The map may include multiple levels of granularity. For instance, in a panned out view, each floor in a building can be configured to a maximum amplitude, such as the low, medium, or high amplitude that was previously discussed. A user can select one of the multiple floors in a building to provide more detailed information with a finer granularity, such as the example illustrated in FIG. 3. The system may be installed on some floors or some buildings of the campus. The virtual can be configured to illustrate on which floors the system is installed. The multiple levels of granularity can enable a user to quickly view and discern any problems over a large number of floors and buildings. When potential problems are encountered, a finer granularity can quickly enable the user to identify a source of an acoustic event.

The audio information sent to the server for display on the virtual map may be recorded for a predetermined amount of time, depending on the desired use and capability of the system. Audio information may be stored permanently, or erased or recorded over after the predetermined amount of time, such as one day, one week, one month, or after a certain size of data is received at the server. The recorded information can then be viewed or reviewed at a later event. This can be helpful to determine the location and timing of an acoustic event at a later date, such as an alarm, a security incident, an accident, a natural disaster, and so forth.

An acoustic mapping system, such as the system 100 illustrated in FIGs. 1, 3, and 4, and described in the preceding paragraphs, can be used in a variety of ways. The system can be used to detect and monitor environmental noise, maintenance issues, emergency response, and hospitality, among other uses.

For example, in hospitality, hotel rooms may be monitored using the acoustic mapping system. A telephonic device in each hotel room can monitor the room for acoustic events. An alarm may be generated if the room has a sustained noise level for a defined period. Once the alarm is triggered, a worker may be sent to the room to access the situation and work with the guests to reduce the noise levels before other guests become overly concerned.

The acoustic mapping system may be used for environmental purposes. For example, lights in a hotel room may be left off and the temperature reduced (in winter months) or increased (in summer months) until guests are detected in the room using the acoustic mapping system. The same system may be configured to detect and monitor the maintenance of the room, including undesired noises from fans, heating, cooling, or plumbing. If a leaky faucet, an ever-running toilet, or a noisy fan form heating or cooling is detected, a repair person can be sent to fix the problem before guests are inconvenienced or critical resources are wasted. In addition, if sound associated with guests is reported in unoccupied rooms, security may be alerted.

In security situations, the acoustic mapping system can provide additional information to make the job of security personnel safer and more efficient. For instance, if an alarm was triggered in a certain area of a large building, rather than walking over to the location to determine what happened, the security personnel may review and replay the acoustic events that were recorded in the acoustic mapping system, such as the system 100. The acoustic mapping system can help the security personnel to detect a location of the acoustic event. The security personnel and/or an automated system may also be able to identify what the acoustic event was that triggered the alarm, such as a person walking through cubicles, a large truck driving by a building, and so forth.

In the event that a security threat has occurred in a building, such as a yelling match, a fight, or a more terroristic action such as gunfire or a hostage situation, the acoustic mapping system can be replayed to monitor the movement of such a threat and identify the present location of the threat based on increased acoustic activity near the threat.

In addition, the sound received by multiple telephony devices can be combined by conferencing the phones together. Conferencing the phones can enhance the ability of security personnel to identify and detect an acoustic event. The security personnel can also use a hands free speaker of the telephony device to communicate in the area where the acoustic event is detected. The security personnel may communicate using the hands free speaker on a single telephony device, or the hands free speakers on multiple telephony devices that are conferenced together.

The information obtained from the acoustic mapping system may be viewed remotely when the monitor 108 is a mobile device such as a smart phone or tablet that can be connected to the server via a wireless local area network (WLAN) connection such as a connection made using the Institute of Electrical and Electronics Engineers (IEEE) 802.11-2012 standard or a Bluetooth wireless standard. Alternatively, a wireless wide area network (WWAN) connection may be made using a standard such as the Institute of Electrical and Electronics Engineers (IEEE) 802.16 specification, Rel. 802.16e or 802.16m, or the third generation partnership project (3GPP) Long Term Evolution (LTE) Rel. 8, 9, 10 or 11. The information communicated to a mobile monitor from the acoustic mapping system can be used to view, from a desired distance, the acoustic events occurring in a selected area, such as an area where a terroristic threat is occurring. This can significantly increase the safety of security personnel, reduce the risk of injury to bystanders, and increase the probability of successfully thwarting the actions of an intruder.

The examples provided herein are not intended to be limiting. The system for acoustic mapping can be used in a wide array of activities to monitor and adjust environments based on the acoustic events that occur within those environments. The system, as described herein, can be quickly and easily implemented using standard equipment, such as telephonic devices in an IP telephony system connected to an IP telephony server. The telephonic devices and server are typically already located at a building. With the addition of software modules, as described herein, the system can be implemented to provide improved analysis, monitoring, and improvements of a selected location, from a single room, to a campus wide or multi-city location business.

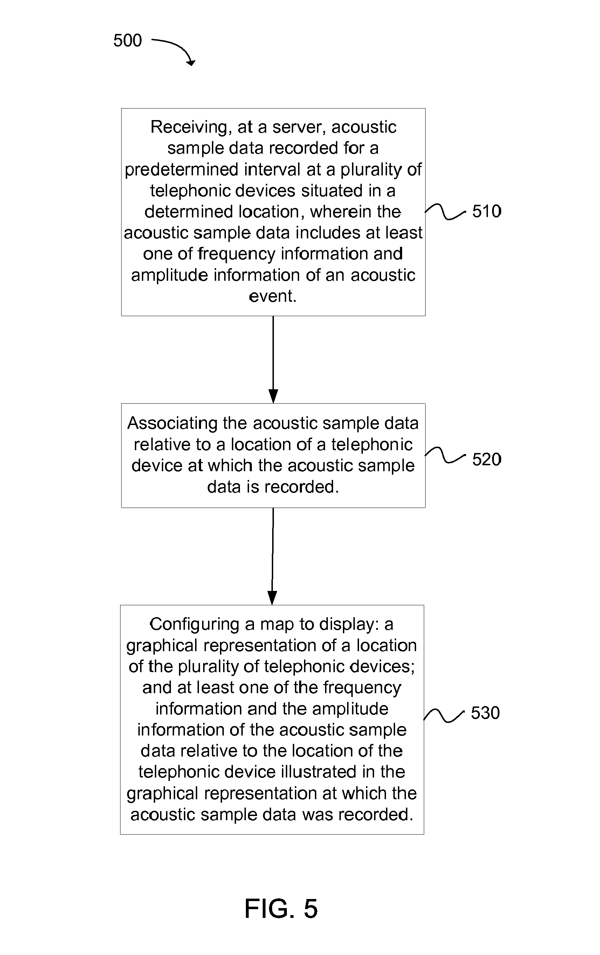

A method 500 for mapping acoustic activities is disclosed, as illustrated in FIG. 5. The method comprises receiving, at a server, acoustic sample data recorded for a predetermined interval at a plurality of telephonic devices situated in a determined location, as shown in block 510. The acoustic sample data can include at least one of frequency information and amplitude information of an acoustic event. In addition, audio information may be communicated. The audio information received at the server can allow the frequency information associated with an acoustic event to be identified at the server. Alternatively, the frequency information may be identified and communicated from telephonic devices that are capable of identifying the frequency information, as previously discussed.

The method 500 can further comprise the operation of associating the acoustic sample data relative to a location of a telephonic device at which the acoustic sample data is recorded, as shown in block 520. The map can then be configured display a graphical representation of a location of the plurality of telephonic devices; and at least one of the frequency information and the amplitude information of the acoustic sample data relative to the location of the telephonic device illustrated in the graphical representation at which the acoustic sample data was recorded 530. The amplitude and frequency information can be displayed as previously discussed with respect to FIGs. 1, 2 and 3. Displaying the amplitude and frequency information in the map can provide an acoustic map operable to display the acoustic activities for the determined location.

The operation of receiving acoustic sample data in the method 500 may further comprise receiving, at the server, a plurality of samples from the plurality of telephonic devices. Each sample can be for a selected period of time. The samples can be measured at each of the plurality of telephonic devices at a selected rate. Each sample can include at least one of audio information, amplitude information, and frequency information for the acoustic event that occurred during the sample period.

The method 500 can further comprise: performing, at the server, a Fast Fourier Transform (FFT) on the audio information to provide frequency information for the acoustic event; and displaying the frequency information on the acoustic map relative to a location of the telephonic device at which the audio information was recorded. The method 500 can also include the operation of filtering selected samples based on at least one of an amplitude signature and a frequency signature of the selected samples to reduce false alarms from the samples.

The operation of receiving acoustic sample data in the method 500 can further comprise receiving, at the server, acoustic sample data for samples having an amplitude that is greater than a selected amplitude threshold. The selected amplitude threshold can be a dynamic threshold that is relative to a noise floor that is determined for each telephonic device over a selected time interval, wherein the noise floor is determined based on an average noise measurement over the selected time interval.

The method 500 can further comprise displaying the selected audio amplitude bands as different colors in the acoustic map to show the acoustic activities for each telephonic device in the selected location, wherein each audio amplitude band represents an acoustic energy amplitude measurement having an amplitude between at least one of a lower amplitude threshold and an upper amplitude threshold.

In some embodiments, the method 500 can include illustrating the graphical representation in a graphical user interface (GUI) to enable a user to select a location on the acoustic map to activate a telephonic device in the plurality of telephonic devices to listen at the location of the telephonic device using a microphone of the telephonic device, wherein the user selects the location based on information of the acoustic activities provided by the acoustic map. The GUI can be configured to enable a user to select at least two locations on the acoustic map to activate at least two telephonic devices in the plurality of telephonic devices to listen at the locations of the at least two telephonic devices using a microphone on each of the at least two telephonic devices.

The method 500 may include the operation of sending a sample rate increase command from the server to at least one of the plurality of telephonic devices to increase a sampling rate by reducing the predetermined interval at which the acoustic data sample is recorded, wherein the sampling rate is increased to increase an amount of data to obtain more accurate information. The sample rate increase command may be sent from the server to telephonic devices that report acoustic sample data having an amplitude greater than a selected threshold.

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments may be referred to herein along with alternatives for the various components thereof. It is understood that such embodiments, examples, and alternatives are not to be construed as defacto equivalents of one another, but are to be considered as separate and autonomous representations of aspects of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that embodiments of the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present disclosure in one or more particular applications, it will be apparent to those of ordinary skill in the art that numerous modifications in form, usage and details of implementation can be made without the exercise of inventive faculty, and without departing from the principles and concepts of the present disclosure. Accordingly, it is not intended that the scope of the present disclosure be limited, except as by the claims set forth below.

## Claims

1. A method for mapping acoustic activities, comprising:
receiving, at a server, acoustic sample data recorded for a predetermined interval at a plurality of telephonic devices situated in a determined location, wherein the acoustic sample data includes at least one of frequency information and amplitude information of an acoustic event;
associating the acoustic sample data relative to a location of a telephonic device at which the acoustic sample data is recorded; and
configuring a map to display:
a graphical representation of a location of the plurality of telephonic devices; and
at least one of the frequency information and the amplitude information of the acoustic sample data relative to the location of the telephonic device illustrated in the graphical representation at which the acoustic sample data was recorded to provide an acoustic map operable to display the acoustic activities for the determined location.

2. The method of claim 1, wherein receiving acoustic sample data further comprises receiving, at the server, a plurality of samples from the plurality of telephonic devices, wherein each sample is for a selected period of time, the samples are measured at each of the plurality of telephonic devices at a selected rate, and each sample includes at least one of audio information, amplitude information, and frequency information for the acoustic event that occurred during the sample period.

3. The method of claim 2, further comprising:
performing, at the server, a Fast Fourier Transform (FFT) on the audio information to provide frequency information for the acoustic event; and
displaying the frequency information on the acoustic map relative to a location of the telephonic device at which the audio information was recorded.

4. The method of any preceding claim, further comprising filtering selected samples based on at least one of an amplitude signature and a frequency signature of the selected samples to reduce false alarms from the samples.

5. The method of any preceding claim, wherein receiving acoustic sample data further comprises receiving, at the server, acoustic sample data for samples having an amplitude that is greater than a selected amplitude threshold,
and optionally wherein the selected amplitude threshold is a dynamic threshold that is relative to a noise floor that is determined for each telephonic device over a selected time interval, wherein the noise floor is determined based on an average noise measurement over the selected time interval.

6. The method of any preceding claim, further comprising displaying selected audio amplitude bands as different colors in the acoustic map to show the acoustic activities for each telephonic device in the selected location, wherein each audio amplitude band represents an acoustic energy amplitude measurement having an amplitude between at least one of a lower amplitude threshold and an upper amplitude threshold.

7. The method of any preceding claim, further comprising illustrating the graphical representation in a graphical user interface (GUI) to enable a user to select a location on the acoustic map to activate a telephonic device in the plurality of telephonic devices to listen at the location of the telephonic device using a microphone of the telephonic device, wherein the user selects the location based on information of the acoustic activities provided by the acoustic map,
and optionally further comprising configuring the GUI to enable a user to select at least two locations on the acoustic map to activate at least two telephonic devices in the plurality of telephonic devices to listen at the locations of the at least two telephonic devices using a microphone on each of the at least two telephonic devices.

8. The method of any preceding claim, further comprising sending a sample rate increase command from the server to at least one of the plurality of telephonic devices to increase a sampling rate by reducing the predetermined interval at which the acoustic data sample is recorded, wherein the sampling rate is increased to increase an amount of data to obtain more accurate information, wherein the sample rate increase command is sent to telephonic devices that report acoustic sample data having an amplitude greater than a selected threshold.

9. An acoustic mapping module in communication with a server, comprising:
a receiving module operable to receive samples of acoustic measurements recorded for a predetermined interval at a plurality of telephonic devices that are positioned at a determined location; and
a mapping module configured to:
map a location for each sample relative to a location of a telephonic device at which the sample is recorded; and
display a representation of at least one of an amplitude and a frequency of the acoustic measurements relative to the location of the telephonic device to provide an acoustic map configured to display the acoustic activities at the selected location.

10. The acoustic mapping module of claim 9, wherein each sample of acoustic measurements comprises a plurality of acoustic measurements recorded at a selected rate for the predetermined interval.

11. The acoustic mapping module of claim 9 or 10, wherein the receiving module is operable to receive a sample from the plurality of telephonic devices at a predetermined frequency.

12. The acoustic mapping module of any of claims 9 to 11, wherein the receiving module is further configured to categorize the acoustic amplitude measurements in each sample into a selected amplitude band, wherein each band has a lower amplitude threshold and a higher amplitude threshold,
and optionally wherein the mapping module is further configured to provide a predetermined display for the amplitude of the measurement based on the selected amplitude band of the acoustic amplitude measurement.

13. The acoustic mapping module of any of claims 9 to 12, further comprising a graphical user interface (GUI) in communication with the acoustic mapping module, wherein the GUI is configured to display the acoustic map for the plurality of telephonic devices at the determined location.

14. At least one non-transitory machine readable storage medium comprising a plurality of instructions adapted to be executed to implement a method for creating an acoustic map, comprising:
receiving acoustic amplitude measurements recorded for a predetermined interval at a plurality of telephonic computing devices that are located at a determined location;
creating a map of the acoustic amplitude measurements based on a location of each of the plurality of telephonic computing devices at which the acoustic amplitude measurement is recorded; and
displaying an amplitude of the acoustic amplitude measurements on the map relative to the location of the telephonic computing device at the selected location to form an acoustic map.

15. The at least one non-transitory machine readable storage medium of claim 14, further comprising receiving a packet of a plurality of samples of the acoustic amplitude measurements over the predetermined interval, wherein each packet is received at a periodic interval and includes frequency bin information for selected frequency ranges recorded in the acoustic amplitude measurements;
and optionally wherein displaying the amplitude further comprises: dividing each sample into one of a plurality of amplitude bands based on an amplitude of the sample, wherein each amplitude band has a lower amplitude threshold and an upper amplitude threshold; and displaying a graphical representation of each sample based on the amplitude band in which the sample is located, wherein each amplitude band has a different graphical representation;
and optionally further comprising displaying frequency bin information for selected frequency ranges recorded in the acoustic amplitude measurements.
